# FASCICULE DE BREVET EUROPEEN

(11) **EP 2 875 547 B1**
(45) Date de publication et mention de la délivrance du brevet: **16.05.2018**
(21) Numéro de dépôt: 13747455.7
(22) Date de dépôt: 17.07.2013
(51) Int. Cl.: H01M 10/04, H01M 2/18, H01M 2/16, H01M 2/02, H01M 2/10

(54) **MODULE DE BATTERIE D'ACCUMULATEURS A CELLULES COMPRIMEES**
BATTERIEMODUL MIT KOMPRIMIERTEN ZELLEN
BATTERY MODULE HAVING COMPRESSED CELLS

(30) Priorité: 17.07.2012 FR 1202026
(43) Date de publication de la demande: 27.05.2015
(73) Titulaire: Renault S.A.S., 92100 Boulogne-Billancourt (FR)
(72) Inventeur: JOSSE, Stéphane, F-78320 Le Mesnil Saint Denis (FR); PASCALY, Gwenaëlle, F-78000 Versailles (FR); BOUYSSI, Lionel, F-75015 Paris (FR)
(86) Numéro de dépôt international: PCT/FR2013/051721
(87) Numéro de publication internationale: WO 2014/013198

(56) Documents cités:
- EP-A1- 1 643 570
- EP-A1- 2 317 586
- WO-A1-2010/081086
- JP-A- 2009 081 056
- US-A1- 2012 064 379

## Description

### DOMAINE TECHNIQUE AUQUEL SE RAPPORTE L'INVENTION

La présente invention concerne de manière générale le domaine des batteries d'accumulateurs.

Elle concerne plus particulièrement un module de batterie d'accumulateurs selon la revendication 1, qui comprend :
- une pluralité de cellules d'accumulateurs empilées les unes sur les autres, et
- un boîtier qui loge lesdites cellules d'accumulateurs et qui comporte deux parois opposées qui définissent des plans moyens sensiblement parallèles, l'une au moins desdites parois opposées présentant une face interne qui comprend un renflement comprimant, selon un axe de compression perpendiculaire auxdits plans moyens, lesdites cellules d'accumulateurs contre l'autre desdites parois opposées.

La présente invention trouve une application particulièrement avantageuse dans le cas d'une batterie d'accumulateurs comportant des cellules à enveloppe souple.

### ARRIERE-PLAN TECHNOLOGIQUE

Les cellules d'accumulateurs électriques à enveloppe souple utilisées dans les boîtiers de modules d'accumulateurs se présentent typiquement sous la forme de plaques d'épaisseurs très fines et sont soumises, au cours de leur charge et de leur décharge, à des variations d'épaisseurs.

Ces variations d'épaisseurs posent alors des problèmes de maintien des cellules d'accumulateurs dans le boîtier.

Ces variations d'épaisseurs posent également des problèmes de connexion électrique des cellules d'accumulateurs en ce sens que le déplacement des cellules risque de rompre les soudures. Ce risque est accru lorsque les cellules sont soumises à des vibrations dues au déplacement du véhicule automobile, et/ou lorsque le module de batterie est positionné sur la tranche.

On connaît alors du document US2008/0057392, un module de batterie d'accumulateurs tel que décrit en introduction, dont le boîtier comprime et immobilise les cellules d'accumulateurs.

Pour le maintien des cellules d'accumulateurs dans le boîtier, il est prévu que les cellules d'accumulateurs présentent quatre ouvertures et que le boîtier comporte quatre tiges cylindriques enfilées dans les ouvertures pour permettre d'immobiliser les cellules entre elles.

A l'assemblage du module de batterie, les tiges cylindriques sont ainsi engagées dans les ouvertures correspondantes des cellules d'accumulateurs et ces tiges sont fixées au couvercle du boîtier du module pour le blocage de ces cellules dans le boîtier de module.

Malheureusement, l'assemblage d'un tel module de batterie est long, fastidieux et onéreux du fait du nombre d'éléments utilisés.

On constate également avec un tel boîtier des problèmes de surchauffe des cellules d'accumulateurs.

### OBJET DE L'INVENTION

Afin de remédier aux inconvénients précités de l'état de la technique, la présente invention propose un module d'une batterie d'accumulateurs dont la mise en oeuvre est simple et dont la fabrication présente un faible coût.

Plus particulièrement, l'invention propose un module de batterie d'accumulateurs tel que défini en introduction, dans lequel il est prévu une pluralité de cloisons de séparation qui s'intercalent entre chaque couple de cellules d'accumulateurs adjacentes et qui comportent chacune :
- une platine de conduction sur laquelle s'appliquent les deux cellules d'accumulateurs adjacentes,
- des moyens de guidage en translation de la platine de conduction dans le boîtier selon ledit axe de compression, lesdits moyens coopérant avec des moyens de guidage complémentaires prévus sur le boîtier pour autoriser un mouvement relatif des cloisons de séparation par rapport aux parois opposées du boîtier, et
- des moyens de blocage d'au moins une première des deux cellules d'accumulateurs adjacentes, selon un axe perpendiculaire à l'axe de compression.

Ainsi, grâce à l'invention, les cellules sont immobilisées et comprimées dans le boîtier de manière simple et peu onéreuse, de telle sorte que les éléments de connexion reliant électriquement les cellules électriques entre elles ne peuvent pas se rompre lorsque le module est soumis à des vibrations. Les cellules d'accumulateurs sont par ailleurs bien refroidies par conduction via ces parois de séparation du module.

D'autres caractéristiques non limitatives et avantageuses d'un module conforme à l'invention sont les suivantes :
- lesdits moyens de blocage sont adaptés à bloquer ladite première cellule d'accumulateurs selon deux axes distincts et perpendiculaires à l'axe de compression ;
- lesdits moyens de blocage sont adaptés à bloquer lesdites deux cellules d'accumulateurs adjacentes selon respectivement deux axes non parallèles et perpendiculaires à l'axe de compression ;
- les moyens de blocage comportent au moins deux protubérances situées en saillie de ladite platine de conduction, de part et d'autre de ladite première cellule d'accumulateurs ;
- lesdits moyens de guidage comportent au moins une patte adaptée à coulisser dans une rainure qui est prévue en creux dans une paroi du boîtier, et qui est profilée selon un axe parallèle à l'axe de compression ;
- lesdits moyens de guidage comportent deux pattes adaptées à coulisser dans deux rainures qui sont prévues en creux dans deux parois parallèles du boîtier, ces deux parois parallèles étant distinctes desdites deux parois opposées ;
- la platine de conduction étant plane, chaque patte s'étend sensiblement dans le plan de la platine de conduction ;
- la platine de conduction présente deux bords opposés parallèles longés par deux rebords qui sont situés au contact de deux parois parallèles du boîtier ;
- chaque patte s'étend en saillie de l'un des deux bords opposés de la platine de conduction et présente une largeur égale, au jeu près, à la largeur de la rainure du boîtier ; et
- chaque cloison de séparation est réalisée d'une seule pièce par découpage et emboutissage d'un feuillard métallique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un module de batterie d'accumulateurs conforme à l'invention ;
- la figure 2 est une vue schématique en perspective d'une cloison de séparation du module de la figure 1 ;
- la figure 3 est une vue schématique de dessus du module de la figure 1, sur laquelle le couvercle du boîtier du module n'a pas été représenté ; et
- la figure 4 est une vue en coupe selon le plan P1 de la figure 1.

Les véhicules automobiles à propulsion électrique et les véhicules hybrides sont équipés de batteries d'accumulateurs puissantes, composées de plusieurs modules identiques, connectés électriquement en série les uns aux autres.

Chaque module 1 est lui-même composé d'un boîtier 100 qui loge une pluralité de cellules d'accumulateurs 20 empilées les unes sur les autres.

Ces cellules d'accumulateurs 20 seront appelées dans la suite de cet exposé « cellules 20 ». Elles sont ici au nombre de huit.

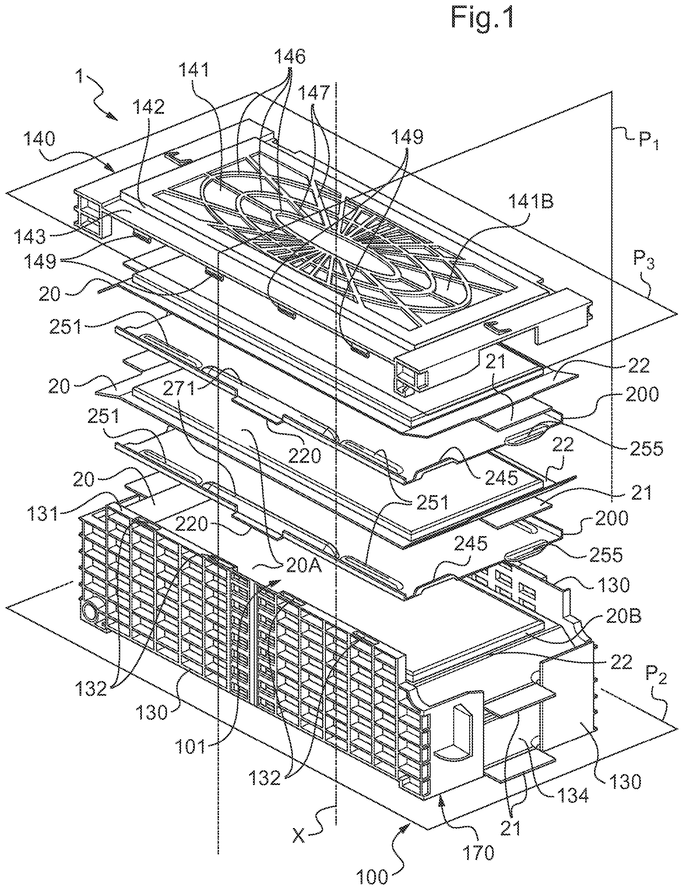

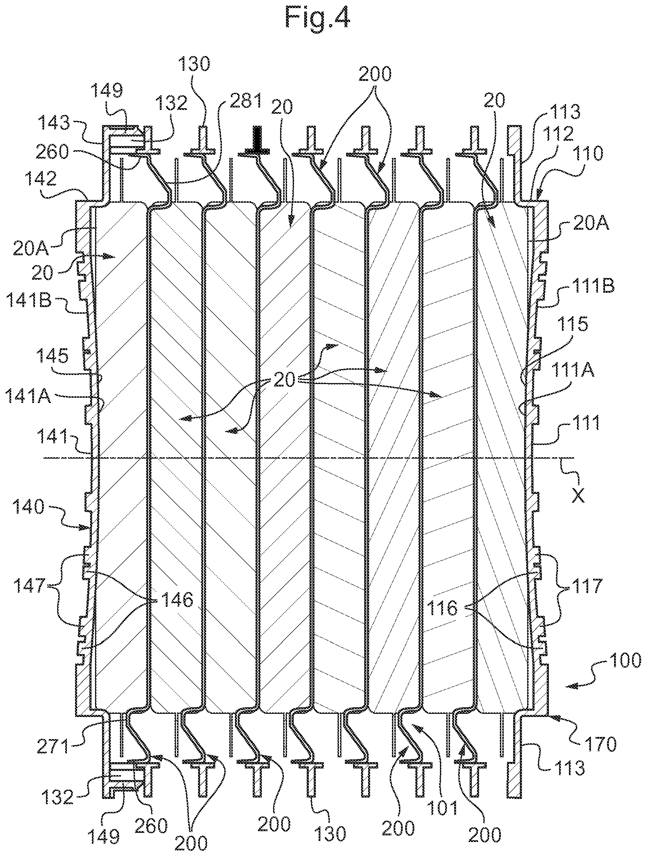

Sur les figures 1 et 4, les cellules 20 sont ici des cellules à enveloppe souple, c'est-à-dire des cellules 20 dont les enveloppes peuvent se déformer lors de leur insertion dans le boîtier 100 et lors de leurs charge et décharge.

Plus particulièrement, les cellules 20 à enveloppe souple comportent une enveloppe extérieure souple qui contient à l'intérieur un électrolyte de solution organique ou d'une solution à base de carbonate et de sels de lithium.

Il s'agit par exemple d'un électrolyte du type Lithium-ion, enveloppé dans une enveloppe constituée par un film plastique entouré d'un film d'aluminium laminé. Le film plastique est destiné à isoler l'électrolyte contenu dans la cellule 20 du film d'aluminium.

Comme le montrent les figures 1 et 4, chaque cellule 20 présente une forme extérieure parallélépipédique dont l'épaisseur est initialement comprise entre 1 millimètre et 15 millimètres.

Les deux faces parallèles les plus grandes de ces cellules 20 sont ici appelées faces principales 20A.

Ces cellules 20 comportent chacune deux bornes de connexion électrique 21 respectivement situées à leurs deux extrémités 22.

Ces bornes de connexion électrique 21 présentent ici chacune une forme de plaque et sont réalisées dans un matériau conducteur d'électricité tel que, par exemple, le cuivre ou l'aluminium.

Ces cellules 20 à enveloppe souple, bien connues de l'homme du métier, ne seront ici pas décrites plus en détail.

On a représenté sur les figures 1, 3 et 4 le boîtier 100 d'un tel module 1.

Ce boîtier 100 présente ici une forme globalement parallélépipédique et creux. Il est formé d'un socle 170 et d'un couvercle 140. Le socle 170 et le couvercle 140 sont fixés rigidement ensemble par des moyens de fixation adaptés, de type vis ou sangles par exemple.

Le socle 170 comporte un fond 110 (figure 4) de forme rectangulaire, à partir des bords duquel s'élèvent quatre parois latérales 130 qui délimitent entre elles un logement d'accueil 101 destiné à accueillir les cellules 20.

Deux des parois latérales 130 opposées, à savoir les plus grandes, sont alvéolées, tandis que les deux autres parois latérales sont sensiblement planes.

Ces deux autres parois latérales présentent chacune une ouverture rectangulaire 134 qui s'étend depuis le fond 110 jusqu'au bord avant du socle 170.

Grâce à ces ouvertures rectangulaires 134, les bornes de connexion 21 des cellules font saillies à l'extérieur du boîtier 100, ce qui permet de les connecter aux autres modules de la batterie d'accumulateurs.

Le logement d'accueil 101 est fermé, à l'opposé dudit fond 110, par le couvercle 140.

Les deux parois opposées 110, 140 que sont le fond 110 et le couvercle 140 présentent ici des formes identiques et définissent des plans moyens P2, P3 sensiblement parallèles.

Chacune de ces deux parois opposées 110, 140 présente une partie périphérique 113, 143 plane en forme de cadre, et une partie centrale 111, 141 rectangulaire qui s'étend en renfoncement vers l'extérieur par rapport à la partie périphérique 113, 143 et qui est reliée à cette dernière par un rebord 112, 142.

Les dimensions de ce rebord 112, 142 sont égales, au jeu près, à celles d'une cellule 20, de manière que ce renfoncement puisse accueillir une telle cellule 20.

Le fond 110 et le couvercle 140 présentent des faces internes 111A, 141A tournées l'une vers l'autre et des faces externes 111B, 141B tournées à l'opposé l'une de l'autre.

Le socle 170 et le couvercle 140 comportent des moyens de fixation l'un sur l'autre.

Sur l'exemple représenté sur les figures 1 et 4, les deux parois latérales 130 les plus grandes du socle 170 présentent ainsi, sur leurs bords libres 131 situés à l'opposé du fond 110, quatre ouvertures 132 destinées à accueillir quatre pattes d'encliquetage 149 prévues en correspondance sur le couvercle 140. Grâce à ces moyens d'encliquetage 132, 149, il est possible de fixer rigidement le couvercle 140 sur le socle 170.

En variante, on pourrait envisager une fixation différente du couvercle sur le socle, par exemple, une fixation par collage, soudage, ou vissage.

Comme le montre la figure 4, les faces internes 111A, 141A du fond 110 et du couvercle 140 forment un renflement 115, 145 vers l'intérieur du logement d'accueil 101 du boîtier 100.

Ces renflements 115, 145 compriment ici, selon un axe de compression X perpendiculaire auxdits plans moyens P2, P3 les cellules 20 les unes contre les autres lorsque le couvercle 130 est rapporté sur le socle 170.

Les renflements 115, 145 sont ici formés par les parties centrales 111, 141 du fond 110 et du couvercle 140, qui sont à cet effet incurvées vers l'intérieur du boîtier 100.

Ces renflements 115, 145 présentent ici des formes convexes.

On entend par « forme convexe » que chaque renflement 115, 145 présente une forme bombée vers le logement d'accueil 101 du boîtier 100, de manière à diminuer le volume du logement d'accueil 101 du boîtier 100.

Lorsque le boîtier 100 n'est pas encore assemblé, les parties centrales 111, 141 du fond 110 et du couvercle 140 présentent chacune, d'une part un premier rayon de courbure selon leur largeur, et, d'autre part, un deuxième rayon de courbure selon leur longueur qui sont chacun non nuls.

Ces premier et deuxième rayons de courbure sont très grands par rapport à la valeur de la largeur et/ou de la longueur du fond 110 et du couvercle 140. Le premier rayon de courbure est supérieur à 45 centimètres et le deuxième rayon de courbure est supérieur à 360 centimètres.

Comme le montrent les figures 1 à 3, le fond 110 et le couvercle 140 présentent des épaisseurs constantes, ici identiques.

En d'autres termes, les faces interne 111A, 141A et externe 111B, 141B de chacune des parois centrales 111, 141 du fond 110 et du couvercle 140 délimitent une paroi convexo-concave d'épaisseur constante, qui est convexe du côté orienté vers le logement d'accueil 101 du boîtier 100 et concave du côté opposé au logement d'accueil 101 du boîtier 100.

Cette épaisseur est comprise entre 1 millimètre et 10 millimètres et est ici égale à 1,5 millimètre.

Les parties centrales 111, 141 du fond 110 et du couvercle 140 sont ici déformables élastiquement, afin de pouvoir comprimer les cellules 20 lors du montage manuel du couvercle 140 sur le socle 170 (voir figure 4), sans toutefois les écraser.

Les faces externes 111B, 141B du fond 110 et du couvercle 140 portent ici au moins une nervure de rigidification 116, 117, 146, 147 adaptée à rigidifier le fond 110 et le couvercle 140.

Comme le montrent plus particulièrement les figures 1 à 4, il est prévu sur la face externe 111B, 141B des parties centrales 111, 141 du fond 110 et du couvercle 140 un premier ensemble de nervures elliptiques 116, 146 ayant un centre commun et un deuxième ensemble de nervures rectilignes 117, 147 qui présentent des axes longitudinaux passant par ce centre commun.

Le centre commun est ici situé au centre du fond 110 et du couvercle 140.

Les nervures 116, 117, 146, 147 présentent ici chacune une section transversale carrée, d'environ 2 millimètres de côté.

Ces premier et deuxième ensembles de nervures 116, 117, 146, 147 sont ainsi destinés à s'opposer à la déformation élastique de la partie centrale 111, 141 du fond 110 et du couvercle 140, pour comprimer plus fortement les cellules 20.

Le fond 110 et le couvercle 140 sont ici formés d'une matière plastique, ce qui leur assure une bonne déformation élastique.

Plus particulièrement, le couvercle 140 et le socle 170 sont ici chacun formés d'une seule pièce par moulage d'une matière plastique.

Selon une caractéristique particulièrement avantageuse du module 1 conforme à l'invention, le boîtier 100 loge une pluralité de cloisons de séparation 200 qui s'intercalent entre chaque couple de cellules 20 adjacentes et qui comportent chacune :
- une platine de conduction 201 sur laquelle s'appliquent les deux cellules 20 adjacentes,
- des moyens de guidage 220 en translation de la platine de conduction 201 dans le boîtier 100 selon ledit axe de compression X, et
- des moyens de blocage 241, 245, 251, 255 d'au moins une première des deux cellules d'accumulateurs 20 adjacentes, selon un axe perpendiculaire à l'axe de compression X.

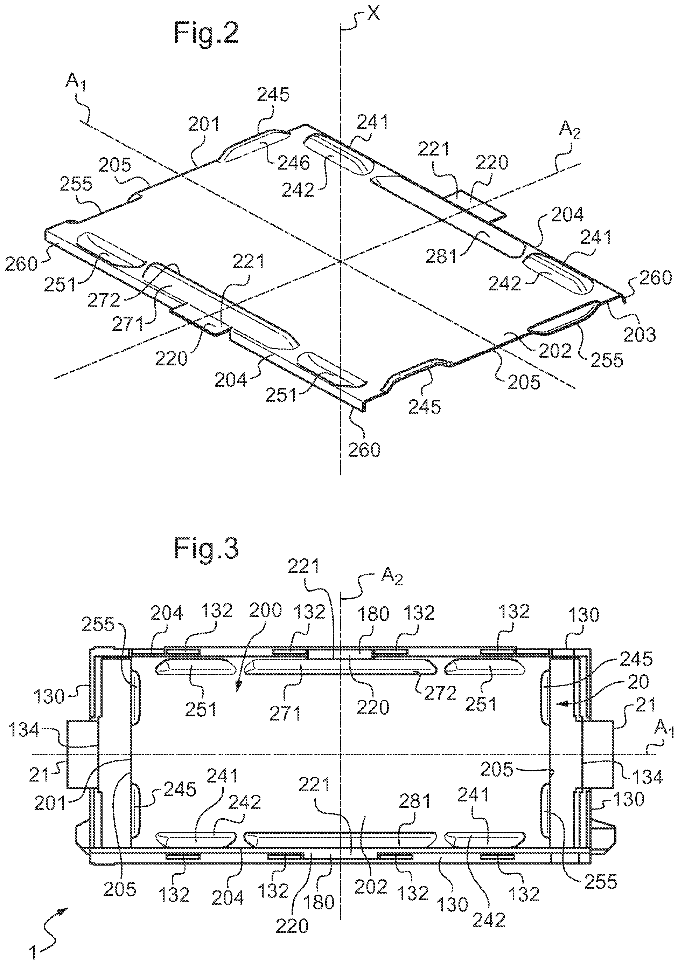

Comme le montre la figure 2, la platine de conduction 201 présente ici une forme de plaque plane rectangulaire, définissant deux bords longitudinaux 204 parallèles et opposés, et deux bords transversaux 205 parallèles et opposés.

Cette platine de conduction 201 présente deux faces principales 202, 203 sur lesquelles les cellules 20 adjacentes sont adaptées à être respectivement rapportées.

Elle est formée d'une matière conductrice de chaleur pour permettre de refroidir ou de réchauffer les deux cellules 20 adjacentes.

Elle est plus particulièrement ici réalisée d'une seule pièce par découpage et emboutissage d'un feuillard métallique.

Avantageusement, comme le montre la figure 2, les moyens de blocage 241, 245, 251, 255 sont adaptés à bloquer au moins une des deux cellules 20 adjacentes selon deux axes de blocage A1, A2 non parallèles et perpendiculaires à l'axe de compression X.

Ici, il est prévu des moyens de blocage 241, 245, 271, 251, 255, 281 sur les deux faces principales 202, 203 de la platine de conduction 201, de manière à bloquer les deux cellules 20 adjacentes (celle située au dessus, et celle située au dessous de la platine de conduction 201), selon ces mêmes deux axes de blocage A1, A2.

Ces moyens de blocage 241, 245, 271, 251, 255, 281 sont ici formés par des protubérances en saillie des deux faces principales 202, 203 de la platine de conduction 201, qui sont formés lors de l'emboutissage de cette platine de conduction 201.

Les moyens de blocage 241, 245, 271, 251, 255, 281 situés sur les deux faces principales 202, 203 de la platine de conduction 201 étant symétriques, seuls les moyens de blocage 241, 245, 271 situés sur la première de ces faces principales 202 seront décrits en détail par la suite de cet exposé.

Du côté de cette première face principale 202, les moyens de blocage 241, 245, 271 comportent cinq protubérances 241, 245, 271 situées à proximité des bords 204, 205 de la platine de conduction 201, de part et d'autre de la cellule 20, pour la bloquer en position.

La platine de conduction 201 présente ainsi, le long de chacun des bords transversaux 205, une protubérance transversale 245. Ces protubérances transversales 245 sont ici adaptées à bloquer la cellule 20 selon le premier axe de blocage A1.

Ces protubérances transversales 245 sont situées à proximité de deux coins diagonalement opposés de la platine de conduction 201 et s'étendent sur moins de la moitié de la longueur des bords transversaux 205.

Ces protubérances transversales 245 présentent ici des formes identiques. Elles présentent notamment chacune une face de butée 246 orientée vers le bord transversal 205 opposé de la platine de conduction 201. Les faces de butée 246 de ces protubérances transversales 245 permettent ainsi de bloquer entre elles la cellule 20 selon le premier axe de blocage A1 (voir figures 2 et 3).

La platine de conduction 201 présente par ailleurs, le long d'un premier de ses bords longitudinaux 204, une première et une deuxième protubérances longitudinales 271, et le long de son deuxième bord longitudinal 204, une troisième protubérance longitudinale 271. Ces protubérances longitudinales 241, 271 sont ici adaptées à bloquer la cellule 20 selon le deuxième axe de blocage A2 (voir figures 2 et 3).

Comme le montre la figure 2, les première et deuxième protubérances longitudinales 241 sont situées à proximité des deux extrémités du premier bord longitudinal 204 correspondant de la platine de conduction 201, tandis que la troisième protubérance longitudinale 271 est située au centre du deuxième bord longitudinal 204 correspondant de la platine de conduction 201.

Ces protubérances longitudinales 241, 271 présentent chacune une face de butée 242, 272 orientée vers le bord longitudinal 204 opposé de la platine de conduction 201. Les faces 242, 272 de ces protubérances longitudinales 241, 271 permettent ainsi de bloquer entre elles la cellule 20 selon le deuxième axe de blocage A2 (voir figures 2 et 3).

La troisième protubérance 241 présente ici une longueur deux fois plus grande que celle des première et deuxième protubérances 241.

Comme le montre les figures 2 et 3, les moyens de guidage 220, qui sont conçus pour guider à translation la platine de conduction 201 dans le boîtier 100 selon l'axe de compression X, comportent au moins une patte 221 adaptée à coulisser dans une rainure 180 qui est prévue en creux dans une paroi du boîtier 100, et qui est profilée selon un axe parallèle à l'axe de compression X.

Plus particulièrement, la platine de conduction 201 comprend ici deux pattes 221 s'étendant à partir des deux bords longitudinaux opposés 204 de la platine de conduction 201, vers l'extérieur, dans le plan de la platine de conduction 201.

Chaque patte 221 présente ici un contour de forme rectangulaire, mais on pourrait envisager un contour de forme différente, par exemple, de forme circulaire ou carrée.

Les deux rainures 180, dans lesquelles coulissent les pattes 221 des moyens de guidage 220, sont situées en creux dans les deux plus petites parois latérales 130. Ces rainures 180 présentent chacune une forme complémentaire de celle des pattes 221 de la platine de conduction 201.

Ainsi, chaque patte 221 présente une largeur égale, au jeu près, à la largeur de la rainure 180 correspondante du boîtier 100. Les pattes 221 permettent ainsi de s'opposer au déplacement de la platine de conduction 201 dans le boîtier 100 selon le premier axe de blocage A1.

Chaque platine de conduction 201 présente par ailleurs une largeur égale à la largeur interne du socle 170 du boîtier 100.

Ainsi, les bords longitudinaux 204 de la platine de conduction 201 sont situés au regard de ces deux grandes parois latérales 130 alvéolées du boîtier 100.

Il est par ailleurs prévu des moyens d'aide au guidage en translation de la cloison de séparation 200 dans le boîtier 100 selon l'axe de compression X. Ces moyens d'aide sont ici portés par la cloison de séparation 200. Ils comportent deux rebords 260 repliés ici à moins de 90 degrés par rapport à la platine de conduction 201, qui s'étendent le long des bords longitudinaux 204 de celle-ci. Ces rebords 260 sont ainsi adaptés à coulisser le long des faces internes des deux grandes parois latérales 130 alvéolées du boîtier 100, afin d'empêcher tout déplacement de la platine de conduction 201 dans le boîtier 100 selon l'axe de blocage A2 et d'empêcher la cloison de séparation 200 de s'incliner dans le boîtier 100. Ici, ces deux rebords 260 sont repliés à 83 degrés par rapport à la platine de conduction 201.

En pratique, comme cela est représenté sur les figures 1 et 4, les cellules 20 sont disposées dans le boîtier 100 de manière à ce que leurs faces principales 20A soient parallèles les unes aux autres.

Les deux cellules 20 situées au contact du fond 110 et du couvercle 140 sont ici logées dans les renfoncements formés par les parties centrales 111, 141 du fond 110 et du couvercle 140, ce qui permet de les maintenir en position dans le boîtier 100. Les six autres cellules 20 sont séparées deux à deux par des cloisons de séparation 200 et sont bloquées en position grâce aux moyens de blocage de ces cloisons de séparation 200.

Les parties centrales 111, 141 du fond 110 et le couvercle 140 du boîtier 100 compriment ces cellules 20 et ces cloisons de séparation 200 selon l'axe de compression X, via les renflements 115, 145.

Une fois le module 1 assemblé, les parties centrales 111, 141 du fond 110 et du couvercle 140 présentent alors chacune un troisième et un quatrième rayons de courbure, différent des premier et deuxième rayons de courbure.

Ici, la taille du boîtier 100 relativement à celle des cellules 20 est telle que les parties centrales 111, 141 du fond 110 et du couvercle 140 se déforment sur une hauteur, appelée flèche, qui est ici supérieure à 1 millimètre.

En d'autres termes, ces parties centrales 111, 141 sont adaptées à s'enfoncer de plus d'un millimètre lors de l'encliquetage du couvercle 140 sur le socle 170 du boîtier 100.

Ainsi, grâce à l'invention, les épaisseurs des cellules 20 comprimées par les parties centrales 111, 141 du fond 110 et du couvercle 140 varient peu lors de la charge et de la décharge de ces cellules 20.

Par ailleurs la compression de ces cellules 20 est répartie de manière homogène grâce à la mobilité des cloisons de séparation 200 selon l'axe de compression X.

La détérioration de ces cellules 20 lors de ces charges et décharges est ainsi réduite, et leur durée de vie est allongée.

La déformation des parties centrales 111, 141 du fond 110 et du couvercle 140, lors de l'assemblage du module 1 de batterie, est alors prévue de telle sorte que les cellules 20 comprimées sont immobilisées dans le boîtier 100, quelques soient les dimensions des cellules 20 et des cloisons de séparation 200, pour autant que ces dimensions respectent l'intervalle de tolérances dimensionnelles prédéterminé.

En effet, chaque cellule 20 et chaque cloison de séparation 200 sont fabriquées avec des dimensions prédéfinies respectant un intervalle de tolérances dimensionnelles prédéterminé.

La tolérance dimensionnelle est de quelques dixièmes de millimètres pour l'épaisseur des cellules 20 et de quelques centièmes de millimètres pour l'épaisseur des cloisons de séparation 200. La tolérance dimensionnelle est ici de plus ou moins 0,2 millimètre pour les cellules 20 et de plus ou moins 0.03 millimètre pour les cloisons de séparation 200.

Par ailleurs, grâce à l'invention, puisque les cellules 20 du module 1 de batterie d'accumulateurs sont parfaitement immobilisées dans le boîtier 100, les bornes de connexion électrique 21 des cellules 20 et des éléments de connexion (non représentés) entre cellules 20 sont soumis à des contraintes qui varient peu, si bien qu'ils ne se rompent du fait des vibrations occasionnées par le déplacement du véhicule ou lorsque le module de batterie est placé sur la tranche.

La présente invention n'est pas limitée au mode de réalisation décrit et représenté, mais l'homme du métier saura y apporter toute variante conforme à son esprit.

Selon un mode de réalisation non-représenté, on pourrait envisager une unique protubérance située au centre de chacun des deux bords transversaux et de chacun des deux bords longitudinaux d'une même face principale de la platine de conduction pour bloquer une cellule adjacente selon deux axes de blocage perpendiculaires entre eux et perpendiculaires à l'axe de compression X. Dans ce mode de réalisation, chaque cloison de séparation permettra de bloquer la cellule située au-dessus d'elle-même (lorsque cette cloison de séparation sera positionnée dans le boîtier de telle manière que ses protubérances soient situées en saillie de sa face supérieure).

Selon un autre mode de réalisation non-représenté, on pourrait envisager que les moyens de blocage soient tels que la cellule située au-dessus de la cloison de séparation est bloquée par cette cloison de séparation uniquement selon un premier axe de blocage perpendiculaire à l'axe de compression X et que la cellule située en dessous de cette cloison de séparation est bloquée par cette cloison de séparation uniquement selon un deuxième axe de blocage perpendiculaire à l'axe de compression X et au premier axe. Dans ce mode de réalisation, chaque cloison de séparation permettra de bloquer la cellule située au-dessus d'elle-même selon le premier axe et la cellule située en dessous d'elle-même selon le deuxième axe.

Enfin, on pourrait envisager des protubérances de formes différentes, se présentant par exemple sous la forme de saillies cylindriques ou carrées.

Selon un autre mode de réalisation non-représenté, on pourrait envisager sur le fond et sur le couvercle du boîtier un renflement présentant une forme différente, tel que par exemple, présentant une forme parallélépipédique vers l'intérieur du logement ou encore une forme de plaque pourvue de multiples bombements convexes sur sa face interne.

On pourrait également prévoir que le fond et/ou le couvercle présentent une forme différente.

On pourrait notamment envisager que le couvercle et/ou le fond soient dépourvus de renfoncement, auquel cas ils seraient chacun formés uniquement d'une partie centrale telle que précitée.

On pourrait également envisager d'autres types de cellules et/ou de boîtier, par exemple présentant des formes de cube, ou de primes.

On pourrait notamment prévoir un boîtier d'un module d'une batterie d'accumulateurs adapté à comporter un nombre différents de cellules électriques, par exemple entre 1 et 12 cellules.

## Revendications

1. Module (1) de batterie d'accumulateurs, qui comprend :
- une pluralité de cellules d'accumulateurs (20) empilées les unes sur les autres,
- un boîtier (100) logeant lesdites cellules d'accumulateurs (20) et comportant deux parois opposées (110, 140) qui définissent des plans moyens (P2, P3) sensiblement parallèles, et qui présentent des faces internes (111A, 141A) tournées l'une vers l'autre, la face interne de l'une au moins desdites parois opposées (110, 140) qui comprime, selon un axe de compression (X) perpendiculaire auxdits plans moyens (P2, P3), lesdites cellules d'accumulateurs (20) contre l'autre desdites parois opposées (110, 140),
- une pluralité de cloisons de séparation (200) qui s'intercalent entre chaque couple de cellules d'accumulateurs (20) adjacentes et qui comportent chacune :
- une platine de conduction (201) sur laquelle s'appliquent les deux cellules d'accumulateurs (20) adjacentes,
- des moyens de guidage (220) en translation de la platine de conduction (201) dans le boîtier (100) selon ledit axe de compression (X), lesdits moyens coopérant avec des moyens de guidage complémentaires prévus sur le boîtier pour autoriser un mouvement relatif des cloisons de séparation par rapport aux parois opposées du boîtier, et
- des moyens de blocage (241, 245, 271, 251, 255, 281) d'au moins une première des deux cellules d'accumulateurs (20) adjacentes, selon un axe perpendiculaire à l'axe de compression,
**caractérisé en ce que** la face interne de l'une au moins desdites parois opposées (110, 140) comprend un renflement (115, 145) central sur ladite paroi, orienté vers l'intérieur du boîtier et élastiquement déformable.

2. Module (1) selon la revendication précédente, dans lequel lesdits moyens de blocage (241, 245, 271, 251, 255, 281) sont adaptés à bloquer ladite première cellule d'accumulateurs (20) selon deux axes non parallèles et perpendiculaires à l'axe de compression (X).

3. Module (1) selon l'une des revendications précédentes, dans lequel lesdits moyens de blocage (241, 245, 271, 251, 255, 281) sont adaptés à bloquer lesdites deux cellules d'accumulateurs (20) adjacentes selon respectivement deux axes non parallèles et perpendiculaires à l'axe de compression (X).

4. Module (1) selon l'une des revendications précédentes, dans lequel les moyens de blocage (241, 245, 271, 251, 255, 281) comportent au moins deux protubérances (241, 245, 271, 251, 255, 281) situées en saillie de ladite platine de conduction (201), de part et d'autre de ladite première cellule d'accumulateurs (20).

5. Module (1) selon l'une des revendications précédentes, dans lequel lesdits moyens de guidage (220) comportent au moins une patte (221) adaptée à coulisser dans une rainure (180) qui est prévue en creux dans une paroi (130) du boîtier (100), et qui est profilée selon un axe parallèle à l'axe de compression (X).

6. Module (1) selon la revendication précédente, dans lequel lesdits moyens de guidage (220) comportent deux pattes (221) adaptées à coulisser dans deux rainures (180) qui sont prévues en creux dans deux parois parallèles (130) du boîtier (100), ces deux parois parallèles (130) étant distinctes desdites deux parois opposées (110, 140).

7. Module (1) selon l'une des revendications 5 et 6, dans lequel la platine de conduction (201) est plane et dans lequel chaque patte (221) s'étend sensiblement dans le plan de la platine de conduction (201).

8. Module (1) selon l'une des revendications 5 à 7, dans lequel la platine de conduction (201) présente deux bords opposés (204) parallèles longés par deux rebords (260) qui sont situés au contact de deux parois parallèles (130) du boîtier (100).

9. Module (1) selon la revendication précédente, dans lequel chaque patte (221) s'étend en saillie de l'un des deux bords opposés (204) de la platine de conduction (201) et présente une largeur égale, au jeu près, à la largeur de la rainure (180) du boîtier (100).

10. Module (1) selon l'une des revendications précédentes, dans lequel chaque cloison de séparation (200) est réalisée d'une seule pièce par découpage et emboutissage d'un feuillard métallique.

## Patentansprüche

1. Modul (1) einer Akkumulatorenbatterie, das enthält:
- eine Vielzahl von übereinander gestapelten Akkumulatorzellen (20),
- ein Gehäuse (100), in dem die Akkumulatorzellen (20) untergebracht sind und das zwei gegenüberliegende Wände (110, 140) aufweist, die im Wesentlichen parallele Mittelebenen (P2, P3) definieren und die zueinander weisende Innenseiten (111A, 141A) aufweisen, wobei die Innenseite mindestens einer der gegenüberliegenden Wände (110, 140) gemäß einer Pressachse (X) lotrecht zu den Mittelebenen (P2, P3) die Akkumulatorzellen (20) gegen die andere der gegenüberliegenden Wände (110, 140) presst,
- eine Vielzahl von Trennwänden (200), die zwischen jedes Paar von benachbarten Akkumulatorzellen (20) eingefügt sind und die je aufweisen:
- eine Leiterplatte (201), auf die sich die zwei benachbarten Akkumulatorzellen (20) auflegen,
- Führungseinrichtungen (220) der Leiterplatte (201) im Gehäuse (100) in Translation gemäß der Pressachse (X), wobei die Einrichtungen mit komplementären Führungseinrichtungen zusammenwirken, die auf dem Gehäuse vorgesehen sind, um eine relative Bewegung der Trennwände bezüglich der gegenüberliegenden Wände des Gehäuses zu erlauben, und
- Blockiereinrichtungen (241, 245, 271, 251, 255, 281) mindestens einer ersten der zwei benachbarten Akkumulatorzellen (20) gemäß einer Achse lotrecht zur Pressachse,
**dadurch gekennzeichnet, dass** die Innenseite mindestens einer der gegenüberliegenden Wände (110, 140) eine zentrale Ausbauchung (115, 145) auf der Wand enthält, die zum Inneren des Gehäuses ausgerichtet und elastisch verformbar ist.

2. Modul (1) nach dem vorhergehenden Anspruch, wobei die Blockiereinrichtungen (241, 245, 271, 251, 255, 281) geeignet sind, die erste Akkumulatorzelle (20) gemäß zwei nicht parallelen und zur Pressachse (X) lotrechten Achsen zu blockieren.

3. Modul (1) nach einem der vorhergehenden Ansprüche, wobei die Blockiereinrichtungen (241, 245, 271, 251, 255, 281) geeignet sind, die zwei benachbarten Akkumulatorzellen (20) gemäß je zwei nicht parallelen und zur Pressachse (X) lotrechten Achsen zu blockieren.

4. Modul (1) nach einem der vorhergehenden Ansprüche, wobei die Blockiereinrichtungen (241, 245, 271, 251, 255, 281) mindestens zwei Vorsprünge (241, 245, 271, 251, 255, 281) aufweisen, die sich von der Leiterplatte (201) vorstehend auf beiden Seiten der ersten Akkumulatorzelle (20) befinden.

5. Modul (1) nach einem der vorhergehenden Ansprüche, wobei die Führungseinrichtungen (220) mindestens eine Lasche (221) aufweisen, die geeignet ist, in einer Rille (180) zu gleiten, die in einer Wand (130) des Gehäuses (100) vertieft vorgesehen ist, und die gemäß einer Achse parallel zur Pressachse (X) profiliert ist.

6. Modul (1) nach dem vorhergehenden Anspruch, wobei die Führungseinrichtungen (220) zwei Laschen (221) aufweisen, die geeignet sind, in zwei Rillen (180) zu gleiten, die in zwei parallelen Wänden (130) des Gehäuses (100) vertieft vorgesehen sind, wobei diese zwei parallelen Wände (130) sich von den zwei gegenüberliegenden Wänden (110, 140) unterscheiden.

7. Modul (1) nach einem der Ansprüche 5 und 6, wobei die Leiterplatte (201) eben ist, und wobei jede Lasche (221) sich im Wesentlichen in der Ebene der Leiterplatte (201) erstreckt.

8. Modul (1) nach einem der Ansprüche 5 bis 7, wobei die Leiterplatte (201) zwei parallele gegenüberliegende Ränder (204) aufweist, an denen zwei Randleisten (260) entlanglaufen, die sich in Kontakt mit zwei parallelen Wänden (130) des Gehäuses (100) befinden.

9. Modul (1) nach dem vorhergehenden Anspruch, wobei jede Lasche (221) sich von einem der zwei gegenüberliegenden Ränder (204) der Leiterplatte (201) vorstehend erstreckt und eine bis auf das Spiel gleiche Breite wie die Breite der Rille (180) des Gehäuses (100) aufweist.

10. Modul (1) nach einem der vorhergehenden Ansprüche, wobei jede Trennwand (200) aus einem Stück durch Schneiden und Prägen einer Metallfolie hergestellt wird.

## Claims

1. Battery module (1), which comprises:
- a plurality of battery cells (20) stacked on one another,
- a housing (100) accommodating said battery cells (20) and having two opposite walls (110, 140) which define substantially parallel mean planes (P2, P3), and which have inner faces (111A, 141A) directed toward one another, the inner face of at least one of said opposite walls (110, 140) which compresses said battery cells (20) along a compression axis (X) perpendicular to said mean planes (P2, P3) against the other of said opposite walls (110, 140),
- a plurality of separating partitions (200) which are interleaved between each pair of adjacent battery cells (20) and which each have:
- a conduction plate (201) on which the two adjacent battery cells (20) bear,
- means (220) for guiding the conduction plate (201) in translation in the housing (100) along said compression axis (X), said means interacting with complementary guide means provided on the housing to allow a relative movement of the separating partitions with respect to the opposite walls of the housing, and
- means (241, 245, 271, 251, 255, 281) for locking at least a first of the two adjacent battery cells (20) on an axis perpendicular to the compression axis,
**characterized in that** the inner face of at least one of said opposite walls (110, 140) comprises a central protrusion (115, 145) on said wall, which protrusion is oriented toward the inside of the housing and elastically deformable.

2. Module (1) according to the preceding claim, wherein said locking means (241, 245, 271, 251, 255, 281) are adapted to lock said first battery cell (20) on two non-parallel axes perpendicular to the compression axis (X).

3. Module (1) according to either of the preceding claims, wherein said locking means (241, 245, 271, 251, 255, 281) are adapted to lock said two adjacent battery cells (20), respectively, on two non-parallel axes perpendicular to the compression axis (X).

4. Module (1) according to any of the preceding claims, wherein the locking means (241, 245, 271, 251, 255, 281) include at least two protuberances (241, 245, 271, 251, 255, 281) which project from said conduction plate (201), on either side of said first battery cell (20) .

5. Module (1) according to any of the preceding claims, wherein said guide means (220) include at least one lug (221) adapted to slide in a groove (180) which is provided in a recessed manner in a wall (130) of the housing (100), and which has its profile running along an axis parallel to the compression axis (X).

6. Module (1) according to the preceding claim, wherein said guide means (220) include two lugs (221) adapted to slide in two grooves (180) which are provided in a recessed manner in two parallel walls (130) of the housing (100), these two parallel walls (130) being distinct from said two opposite walls (110, 140) .

7. Module (1) according to either of Claims 5 and 6, wherein the conduction plate (201) is flat and wherein each lug (221) extends substantially in the plane of the conduction plate (201).

8. Module (1) according to any of Claims 5 to 7, wherein the conduction plate (201) has two parallel opposite edges (204) along which run two flanges (260) which are located in contact with two parallel walls (130) of the housing (100).

9. Module (1) according to the preceding claim, wherein each lug (221) extends in a projecting manner from one of the two opposite edges (204) of the conduction plate (201) and has a width equal to the width of the groove (180) in the housing (100) except for the clearance.

10. Module (1) according to any of the preceding claims, wherein each separating partition (200) is made in one piece by cutting and punching from a metal sheet.
